# EUROPEAN PATENT SPECIFICATION

(11) **EP 1 206 400 B1**
(45) Date of publication and mention of the grant of the patent: **19.10.2005**
(21) Application number: 00951830.9
(22) Date of filing: 14.07.2000
(51) Int. Cl.: B65G 47/14, B65B 43/42

(54) **ENHANCEMENTS IN A MACHINE FOR ORIENTING CONTAINERS**
VERBESSERUNG EINER VORRICHTUNG ZUM AUSRICHTEN VON BEHÄLTERN
AMELIORATIONS DANS UNE MACHINE DESTINEES A ORIENTER DES CONTENEURS

(30) Priority: 25.08.1999 IT PR990062
(43) Date of publication of application: 22.05.2002
(73) Proprietor: Lanfranchi, Lino, 43044 Collecchio (Parma) (IT)
(72) Inventor: Lanfranchi, Lino, 43044 Collecchio (Parma) (IT)
(74) Representative: Guareschi, Antonella
(86) International application number: PCT/IT2000/000293
(87) International publication number: WO 2001/014226

(56) References cited:
- EP-A- 0 065 866
- EP-A- 0 540 477
- FR-A- 2 682 093
- GB-A- 1 558 379

## Description

### TECHNICAL FIELD AND BACKGROUND ART

The present invention relates to some enhancements in a machine for orienting containers, such as bottles.

In particular, the machines in question pertain to the sector of automatic filling or bottling plants in which such orienting machines perform the function of receiving the containers or bottles positioned at random and orient them arranging them in rows on a conveyor with their opening facing upwards.

Different types of orienting machines are known, and in particular the present invention refers to an orienting machine as described in patent No. IT 1253395 in the name of the same Applicant.

This machine has a fixed cylindrical structure with vertical axis which encloses in order a rotating cylinder and a fixed conical structure, both coaxial relative to said cylindrical structure.

In the annulus between the rotating cylinder and the maximum radial extension of the conical structure, some elevators are inserted, engaged in guides integral with the rotating cylinder itself and providing housings able to translate between a lower edge of the conical structure and an upper edge of the cylinder, to effect the transfer of the container. The vertical alternating translation motion is imparted to the elevators by means of radial arms positioned inferiorly to the fixed conical structure, rotating about the axis of rotation of the cylinder and operatively connected to a fixed cam. This cam is shaped in such a way as to raise and lower the arms and consequently the elevators in determined positions relative to the trajectory of rotation of the rotating cylinder.

The containers are introduced into the orienting machine from above, roll along the fixed conical structure until reaching its lower edge and position themselves tangentially both to the conical structure and to the rotating cylinder.

When the elevator is positioned in proximity to the upper edge of the cylinder, the container positions itself against the vertical wall of the elevator; subsequently, the command arm associated with the elevator causes it to drop down to the lower edge of the conical structure, making accessible to the containers the housing obtained between the elevator, the rotating cylinder and the guides of the elevator itself.

The container is positioned horizontally on the elevator and is translated vertically to the upper edge of the rotating cylinder to be subsequently inserted into receptacles tangentially integral with the rotating cylinder.

Inferiorly to each receptacle is provided a fixed ring, integral with the fixed external cylindrical structure. This ring presents at least an interruption corresponding to a position for offloading the containers, in which the containers fall internally to vertical funnels integral with the rotating cylinder.

The width of the elevator and in particular of the housing obtained between the elevator, the rotating cylinder and the guides of the elevator itself, must therefore be such as to receive a container positioned horizontally.

In particular, in the case of machines for orienting bottles, it may be necessary to operate with formats varying between 0.5 and 2 litres, with consequent considerable variations of the height of the bottles.

Known orienting machines have receptacles and funnels which can be replaced to accommodate the dimensions of the bottles, but the number of elevators is fixed and does not vary according to the height of the bottles.

Consequently, at each rotation of the rotating cylinder, known orienting machines raise substantially the same quantity of containers from the lower edge of the conical structure to the upper edge of the rotating cylinder. In the case, for instance, of a format change from 2 litres to 0.5 litres, known orienting machine are not capable of exploiting the lesser height of the bottles and hence their lesser bulk once they are positioned horizontally along the circumference of the rotating cylinders, since they are not able to adapt the width of the elevators.

Known orienting machines thus exhibit the same productivity for all formats of bottles, or generally of containers.

### DISCLOSURE OF INVENTION

The aim of the present invention is to eliminate the aforesaid drawbacks making available some enhancements in a machine for orienting containers which allow to exploit the height variation of the containers in the passage from a larger format to a smaller format, thereby enabling to increase the productivity of the machine in case of lesser formats. Said aims are fully achieved by the enhancements in machines for orienting containers, constituting the subject of the present invention, which are characterised by the content of the claims set out below and in particular in that it comprises at least a divider element able to be mounted on said cylinder and extending radially towards the interior of the cylinder itself, said divider element being inserted into a slit obtained in at least one of said elevators to provide, on a same elevator, distinct housings of the containers to be transferred from said lower edge of the conical structure to said upper edge of the cylinder.

Advantageously, the enhancements of the present invention are further characterised in that said divider element comprises a portion extending radially until partially superposing the radial dimension of said conical structure, to facilitate the positioning of the containers on said distinct housings of said elevators.

Moreover, said divider element is advantageously mounted on said cylinder by snap-on fastening means.

### BEST MODE FOR CARRYING OUT THE INVENTION

This and other features shall become more readily apparent from the following description of a preferred embodiment illustrated, purely by way of non limiting example, in the accompanying drawing tables, in which:
- Figure 1 shows a portion of a diametrical section view of an orienting machine comprising the enhancements according to the present invention;
- Figure 2 shows a plan view of the portion of orienting machine shown in Figure 1;

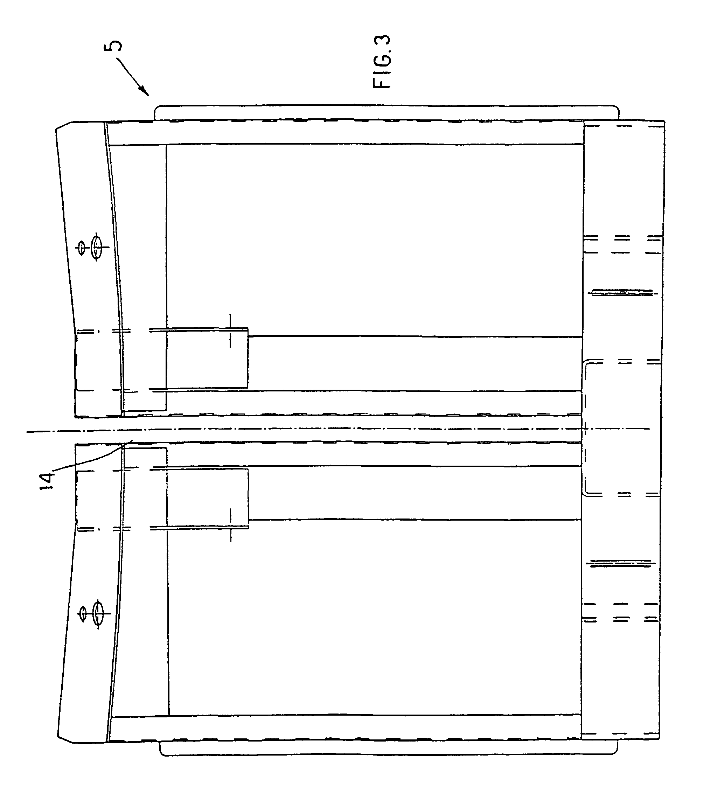

- Figure 3 shows a front view of an elevator.

With reference to the figures, the reference number 1 indicates a fixed external cylindrical structure of a machine for orienting containers 2, such as bottles.

This cylindrical structure 1 has a vertical axis and encloses within it in order a rotating cylinder 3 and a fixed conical structure 4; said cylinder 3 and said conical structure 4 are coaxial to the cylindrical structure 1.

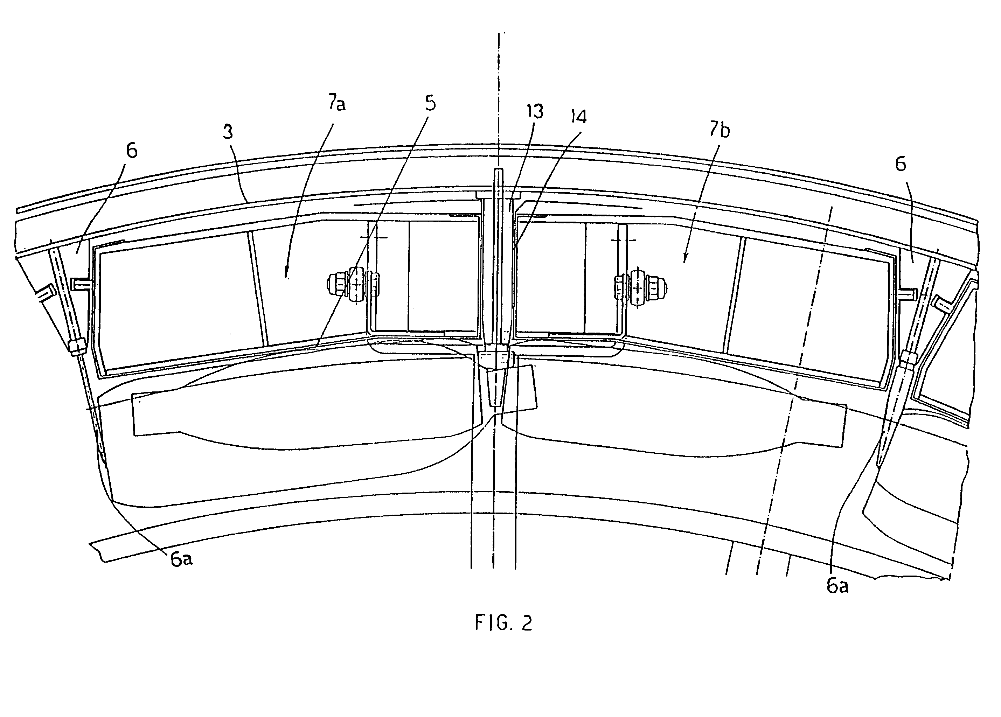

Between the cylinder 3 and the maximum diametrical extension of the conical structure 4, corresponding to its lower edge 4a, are inserted elevators 5 engaged in guides 6 internally integral to the cylinder itself. A shown in Figure 2, each guide 6 presents a portion 6a extending radially towards the interior of the cylinder 3 until they partially superpose the conical structure 4 to facilitate the insertion of a container 2 on the elevator 5.

The elevators 5 provide housings 7 to receive the containers 2 positioned horizontally; said housings 7 are defined by an inclined plane 5a of the elevator itself, by the guides 6 and by the cylinder 3.

Moreover, each elevator 5 is connected, by means of a connecting rod 8, to a command arm positioned substantially radial relative to the cylinder 3 and inferiorly to the conical structure 4.

The command arms 9 rotate about the vertical axis of rotation of the cylinder 3 and are operatively in contact with a cam, not shown in the figure, which commands the raising and lowering of the elevators themselves along the guides 6.

In particular the elevators 5 can translate between the lower edge 4a of the conical structure 4 and an upper edge 3a of the cylinder 3.

Between the cylinder 3 and the fixed cylindrical structure 1 are inserted some receptacles 10 integral with the cylinder itself. The receptacles are positioned in correspondence with each elevator 5 to receive the containers positioned horizontally.

Inferiorly to each receptacle 10 and generally made in a single piece therewith, is provided an outlet channel 11 structured as a funnel to receive the container of the receptacle 10 and route it positioned vertically on a conveyor not shown herein.

Between the receptacle 10 and the outlet channels 11 is provided a fixed ring 12, integral with the cylindrical structure 1. The fixed ring 12 presents some interruptions, not shown herein, which allow to transfer the container 2 from the receptacle 10 to the outlet channel 11. In particular during the fall of the container from the receptacle 10 to the outlet channel 11 the known shape of the receptacle causes the container to rotate 90°, always maintaining the opening oriented upwards.

The receptacles 10 and the outlet channels 11 can be replaced to accommodate the format of container to be straightened; in particular in the case of bottles, passing from a format of 2 litres to a format of 0.5 litres, dual receptacles with a dual outlet channel are provided.

The enhancements introduced in an orienting machine as described above, originally comprise a dividing element 13 which can be mounted integral with the cylinder 3 and which extends radially towards the interior of the cylinder itself in such a way as to be inserted into a slit 14 obtained in a corresponding elevator 5.

The presence of the divider element 13 allows to obtain, on a same elevator 5, two distinct housings 7a and 7b to contain twice the number of containers to be transferred from the lower edge 4a of the conical structure to the upper edge 3a of the cylinder 3.

The divider element 13 advantageously comprises a lower portion 13a which extends radially until it is partially superposed to the radial dimension of the conical structure 4, to facilitate the positioning of the containers 2 on the distinct housings 7a and 7b.

The divider element 13 can advantageously be mounted on the cylinder 3 with snap-on fastening means 15. These fastening means 15 comprise a stop 16 integral with the cylinder 3 and a rod 17, integral with the divider element 13 and extending inferiorly relative thereto.

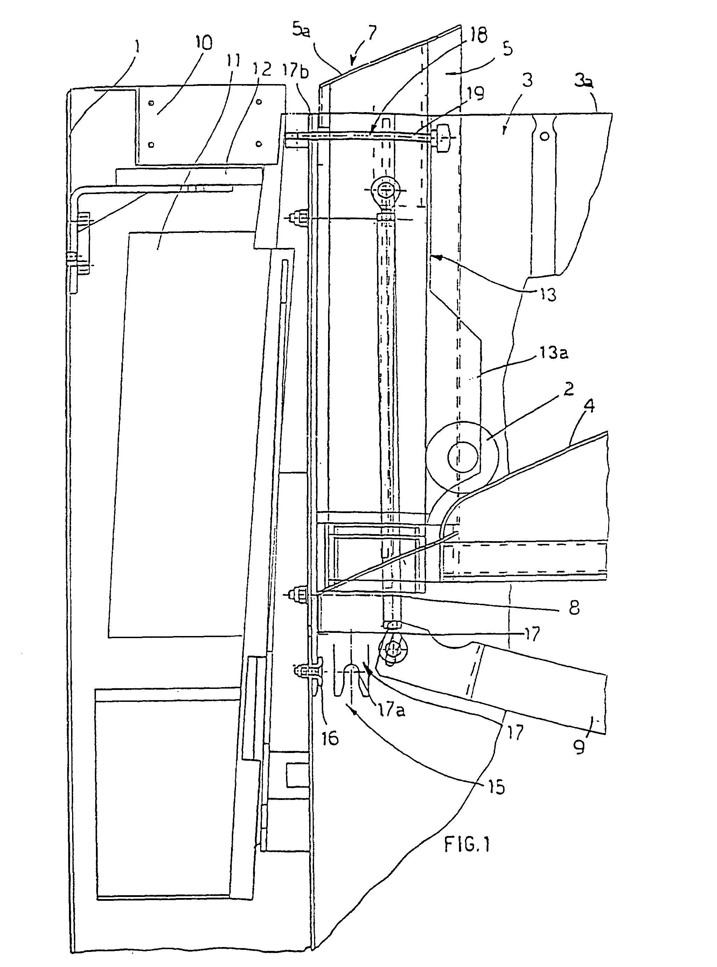

The rod 17 has an extremity 17a, "U" shaped to be inserted into the stop 16, as shown in Figure 1.

The snap-on fastening means 15 comprise locking means 18 to lock in a stable manner the other extremity 17b of the rod 17. In particular, the locking means 18 can be obtained by means of threaded elements 19 able to be inserted into the divider element 13 over its entire thickness, securing the extremity 17b of the rod 17 and the divider element itself to the cylinder 3.

The enhancements as described above allow to achieve important advantages. In particular, in the passage from a larger format to a smaller format of the containers, the enhancements introduced allow to multiply the yield of the orienting machine, expressed in terms of bottles 2 straightened at each rotation of the cylinder 3, without drastically modifying the structure of the machine itself.

It is sufficient to insert the divider element 13 into the slit 14 of the elevator 5 to obtain two distinct housings 7a and 7b, thus raising twice the number of containers at each rotation of the cylinder 2.

The presence of the projection 13a further allows to route the container on the elevator 5, preventing it from completing an empty run and hence contributing to position a container in both distinct housings 7a and 7b, whereas otherwise the housing positioned downstream of the divider element, according to the direction of rotation of the cylinder 3 would be favoured.

## Claims

1. Enhancements in a machine for orienting containers (2), of the type comprising:
a cylinder (3) rotating about a vertical axis;
a fixed conical structure (4) positioned internal and coaxial relative to said cylinder (3) to receive the containers (2);
a plurality of elevators (5) positioned between said cylinder (3) and said conical structure (4), engaged in guides (6) integral with the cylinder itself and providing housings (7) able to translate between a lower edge (4a) of said conical structure (4) and an upper edge (3a) of said cylinder (3) for transferring said containers (2);
**characterised in that** it comprises at least a divider element (13) able to be mounted on said cylinder (3) and extending radially towards the interior of the cylinder itself, said divider element (13) being inserted in a slit (14) obtained in at least one of said elevators (5) to provide, on a same elevator, distinct housings (7a, 7b) of the containers (2) to be transferred from said lower edge (4a) of the conical structure (4b) to said upper edge (3a) of the cylinder (3).

2. Enhancements as claimed in claim 1, **characterised in that** said divider element (13) comprises a lower portion (13a) extending radially until it is partially superposed to the radial dimension of said conical structure (4), to facilitate the positioning of the container (2) on said distinct housings (7a, 7b) of said elevators (5).

3. Enhancements as claimed in any of the previous claims, **characterised in that** said divider element (13) is mounted on said cylinder (3) with snap-on fastening means (15).

4. Enhancements as claimed in claim 3, **characterised in that** said snap-on fastening means (15) comprise:
a stop (16) integral with said cylinder (3);
a rod (17), integral with said divider element (13), having an extremity (17a), "U" shaped to be inserted in said stop (16);
locking means (18) to lock in a stable manner the other extremity (17b) of said rod (17).

## Patentansprüche

1. Verbesserungen an einer Maschine zur Ausrichtung von Behältern (2), aufweisend:
einen um eine vertikale Achse rotierenden Zylinder (3); eine festsitzende konische Struktur (4), die innerhalb und koaxial zu dem Zylinder (3) positioniert ist, um die Behälter zu empfangen;
mehrere Heber (5), die zwischen dem Zylinder (3) und der konischen Struktur (4) positioniert sind und die in Führungen (6) eingreifen, die innen in den Zylinder integriert sind und Gehäuse (7), die in der Lage sind, sich zwischen der Unterkante (4a) der konischen Struktur und der Oberkante (3a) des Zylinders (3) zu verschieben, um die Behälter (2) weiterzuleiten;
**dadurch gekennzeichnet, daß**
sie zumindest ein Teilerelement (13) aufweisen, das an dem Zylinder (3) befestigt werden kann und radial zum Inneren des Zylinders reicht, wobei das Teilerelement (13) in einen Schlitz (14) eingesetzt ist, der in mindestens einem Heber (5) geschaffen wurde, um an demselben Heber verschiedene Gehäuse (7a,7b) für den Behälter (2) bereitzustellen, der von der Unterkante (4a) der konischen Struktur zur Oberkante (3a) des Zylinders (3) zu überführen ist.

2. Verbesserungen gemäß Anspruch 1,
**dadurch gekennzeichnet, daß**
das Teilerelement (13) ein unteres Teilstück (13a) aufweist, das sich radial ausdehnt, bis es teilweise die radiale Ausdehnung der konischen Struktur (4) überdeckt, um die Positionierung der Behälter (2) auf den verschiedenen Gehäusen (7a,7b) der Heber (5) zu erleichtern.

3. Verbesserungen gemäß jedem der vorangegangenen Ansprüche,
**dadurch gekennzeichnet, daß**
das Teilerelement mit einer Schnappverschlußvorrichtung (15) an dem Zylinder (3) befestigt ist.

4. Verbesserungen gemäß Anspruch 3,
**dadurch gekennzeichnet, daß**
die Schnappverschlußvorrichtung (15) aufweist:
einen Stopper (16), der in den Zylinder (3) integriert ist;
eine in das Teilerelement (13) integrierte Stange (17), mit eine Spitze (17a), die "U"-förmig ist, um in den Stopper (16) eingesetzt zu werden;
eine Verschlußvorrichtung (18), um auf stabile Weise die andere Spitze (17b) der Stange (17) zu arretieren.

## Revendications

1. Améliorations dans une machine destinée à orienter des conteneurs (2), du type comprenant:
- un cylindre (3) pivotant autour d'un axe vertical;
- une structure conique fixe (4) positionnée à l'intérieur et de manière coaxiale par rapport audit cylindre (3) pour recevoir les conteneurs (2);
- une pluralité d'éléments de soulèvement (5) positionnés entre ledit cylindre (3) et ladite structure conique (4), engagés dans des guides (6) faisant partie intégrante du cylindre lui-même et prévoyant des logements (7) pouvant translater entre un bord inférieur (4a) de ladite structure conique (4) et un bord supérieur (3a) dudit cylindre (3) pour transférer lesdits conteneurs (2);
**caractérisée en ce qu'**elle comprend au moins un élément séparateur (13) pouvant être monté sur ledit cylindre (3) et s'étendant en direction radiale vers l'intérieur du cylindre lui-même, ledit élément séparateur (13) étant inséré dans une fente (14) pratiquée dans au moins un desdits éléments de soulèvement (5) pour présenter, sur un même élément de soulèvement, des logements (7a, 7b) distincts des conteneurs (2) à transférer dudit bord inférieur (4a) de la structure conique (4b) audit bord supérieur (3a) du cylindre (3).

2. Améliorations selon la revendication 1, **caractérisées en ce que** ledit élément séparateur (13) comprend une portion inférieure (13a) s'étendant en direction radiale jusqu'à ce qu'elle soit partiellement superposée à la dimension radiale de ladite structure conique (4), pour faciliter le positionnement du conteneur (2) sur lesdits logements distincts (7a, 7b) desdits éléments de soulèvement (5).

3. Améliorations selon n'importe laquelle des revendications précédentes, **caractérisées en ce que** ledit élément séparateur (13) est monté sur ledit cylindre (3) par l'intermédiaire de moyens de fixation par encliquetage (15).

4. Améliorations selon la revendication 3, **caractérisées en ce que** lesdits moyens de fixation par encliquetage (15) comprennent:
- un élément fixe d'encliquetage (16) solidaire dudit cylindre (3);
- une tige (17), faisant partie intégrante avec ledit élément séparateur (13), pourvue d'une extrémité (17a), en forme de "U" et devant être insérée sur ledit élément fixe d'encliquetage (16);
- des moyens de blocage (18) pour bloquer de manière stable l'autre extrémité (17b) de ladite tige (17).
